# EUROPÄISCHE PATENTSCHRIFT

(11) **EP 2 342 470 B1**
(45) Veröffentlichungstag und Bekanntmachung des Hinweises auf die Patenterteilung: **10.04.2013**
(21) Anmeldenummer: 09778731.1
(22) Anmeldetag: 25.09.2009
(51) Int. Cl.: F16C 3/035, F16C 29/02, F16C 33/20, B29C 59/04, B62D 1/16

(54) **GLEITHÜLSE**
SLIDING SLEEVE
DOUILLE COULISSANTE

(30) Priorität: 01.10.2008 DE 102008049825
(43) Veröffentlichungstag der Anmeldung: 13.07.2011
(73) Patentinhaber: ThyssenKrupp Presta AG, 9492 Eschen (LI)
(72) Erfinder: RIETZLER, Andreas, AT-6800 Feldkirch (AT)
(74) Vertreter: Lenzing Gerber Stute
(86) Internationale Anmeldenummer: PCT/EP2009/006946
(87) Internationale Veröffentlichungsnummer: WO 2010/037509

(56) Entgegenhaltungen:
- EP-A2- 1 873 038
- DE-A1- 3 815 778
- US-A- 3 575 787
- US-A- 4 667 530

## Beschreibung

Die vorliegende Erfindung betrifft eine Gleithülse zur Verwendung zwischen zwei ineinander teleskopierbaren oder drehbaren Bauelementen mit den Merkmalen des Oberbegriffs des Anspruchs 1 sowie eine teleskopierbare Lenkspindel mit den Merkmalen des Oberbegriffs des Anspruchs 5 sowie ein Verfahren zur Herstellung einer Gleithülse mit den Merkmalen des Anspruchs 11.

Gleithülsen werden zur Reibungsminderung und/oder zum Spielausgleich beispielsweise zwischen gegeneinander verdrehbare und teleskopierbare Mantelrohren und zwischen einer äußeren und einer inneren Welle einer teleskopierbaren Lenkspindel eingesetzt.

Teleskopierbare Lenkspindeln weisen zwei koaxiale Wellenteile auf, die einen unrunden Querschnitt aufweisen und die axial verschieblich sind, aber ein Drehmoment übertragen können. Wesentlich bei Lenkspindeln ist die Spielfreiheit bei der Drehmomentübertragung, aber auch eine möglichst geringe Reibung. Teleskopierbare Lenkspindeln werden in Kraftfahrzeugen zwischen dem Lenkgetriebe und der im allgemeinen verstellbaren Lenksäule eingesetzt. Sie sollen sowohl geringfügige Änderungen des Abstandes zwischen dem Lenkgetriebe und der Lenksäule kompensieren, wie sie beispielsweise auf Grund dynamischer Belastungen im Fahrbetrieb durch Verwinden der Karosserie entstehen, aber auch durch Bewegungen des Lenkgetriebes in einer Gummilagerung und/oder eine Längenverstellbarkeit der Lenkspindel ermöglichen.

Im Stand der Technik ist aus der Druckschrift DE 32 23 004 bekannt, dass eine äußere und eine innere Welle ein entsprechend komplementäres Profil aufweisen, um eine Übertragung von Drehmomenten bei gleichzeitiger Teleskopierbarkeit zu ermöglichen. Zur Erzielung einer hohen Spielfreiheit wird mit Werkzeugen die äußere Welle der inneren Welle im Profil entsprechend angepasst. Dabei sind sowohl rohrförmige innere Wellen als auch innere Wellen aus Vollmaterial bekannt. Die US 5,383,811 zeigt ein Kunststoffelement, das zwischen die teleskopierbaren Wellenabschnitte eingefügt wird. Ebenso zeigt die EP 0 755 843 B1 ein Kunststoffzwischenstück, das jedoch kein Drehmoment übertragen kann. Auch die US 5,590,565 offenbart ein Kunststoffzwischenstück zwischen zwei teleskopierbaren Rohren, das ebenfalls nicht geeignet ist, ein Drehmoment zu übertragen.

Ein weiterer Stand der Technik wird in EP 0 916 564 B1 gezeigt. Hier ist eine teleskopierbare Lenkspindel mit unrundem Profil der zusammenwirkenden Wellenteile dargestellt. Zwischen den beiden Wellenteilen ist eine Kunststoffhülse vorgesehen, deren Aufgabe es ist, die Gleiteigenschaften dauerhaltbar zu verbessern. Insbesondere soll die Neigung zu einem sogenannten Stick-Slip-Effekt verringert werden. Dieser Effekt bewirkt bei kleinen Bewegungen auf Grund der Differenz zwischen Haftreibung und Gleitreibung eine Geräuschentwicklung, die in Kraftfahrzeuglenkungen nicht toleriert wird.

Dies gelingt bei der teleskopierbaren Lenkspindel nach dem Stand der Technik nicht dauerhaft zufriedenstellend.

Gleitlagerungen mit reibungsmindernden Eigenschaften, die den Stick-Slip nicht aufweisen sollen, sind aus zwei weiteren Druckschriften bekannt. Die DE 41 30 688 A1 zeigt eine reibungsmindernde Beschichtung eines Gleitlagers für die Kolbenstange eines Stoßdämpfers. Diese Lagerung ist nicht dazu vorgesehen, Drehmomente zu übertragen. Die US2003/0156769A1 zeigt verschiedene Ausbildungen von hydrostatischen Lagern. Die Lagerflächen sind mit Schlitzen versehen, durch die unter Druck ein Öl zwischen die sich gegenüber liegenden Lagerflächen gedrängt werden kann. Auch diese Lager sind nicht zur Übertragung von Drehmomenten geeignet. Beide Lagerarten sind aufwändig in der Herstellung und fordern eine hohe Oberflächengüte der relativ zu einander beweglichen Teile. Diese Lager sind deshalb für die Lagerung von teleskopierbaren Lenkspindeln nicht geeignet.

Der nächstkommende Stand der Technik ist in den Druckschriften EP 1 873 038 A1 und US 4 667 530 A1 dargestellt. Hier ist eine teleskopierbare Lenkspindel mit unrundem Querschnitt mit einer Gleithülse zwischen den axial verschieblichen Bauelementen dargestellt. Die Gleithülse ist mit umlaufenden oder achsparallelen Nuten versehen, in denen ein Schmiermittel angeordnet werden kann. Die Nuten oder Rillen sind als regelmäßige, makroskopische Struktur in die Oberfläche der Gleithülse eingeformt. Dies bedeutet, dass bei der Montage eine größere Menge an Schmiermittel gezielt in diese Nuten eingebracht werden muss. Solche Schmiermitteldepots sind im Kraftfahrzeug grundsätzlich problematisch, weil sich unter Einfluss der Schwerkraft und der zum Teil hohen Umgebungstemperaturen in Kraftfahrzeugen solches Schmiermittel verlagern kann. Es kann zur Unterseite der jeweiligen Rille wandern und letzlich bei Bewegung aus der Gleithülse austreten.

Es ist deshalb Aufgabe der vorliegenden Erfindung, eine Gleithülse und insbesondere eine teleskopierbare Lenkspindel zu schaffen, die dauerhaft verbesserte Gleiteigenschaften aufweist.

Diese Aufgabe wird von einer Gleithülse mit den Merkmalen des Anspruchs 1 und von einer Lenkspindel mit den Merkmalen des Anspruchs 5 sowie von einem Verfahren mit den Merkmalen des Anspruchs 11 gelöst. In den anhängigen Ansprüchen sind vorteilhafte Weiterbildungen der Erfindung dargestellt.

Weil wenigstens ein Bereich der inneren und/oder der äußeren Oberfläche nach der Herstellung durch Schleifen, Strahlen oder mit einem Umformverfahren mit einer Schmierstoff haltenden Oberflächenstruktur ausgestattet ist, kann sie aufgetragenen Schmierstoff in den entstehenden Vertiefungen dauerhaft halten. Weil weiter die schmierstoffhaltende Oberflächenstruktur durch aufgebrochene Ketten der langkettigen Polymere der Gleithülse gebildet ist, wobei die aufgebrochenen Ketten die mittels einer Walzoperation in der Gusshaut erzeugt sind, sind geringe Mengen an Schmiermittel erforderlich. Demgegenüber ist die verbleibende tragende Oberfläche der Hülse, verglichen mit einer mit makroskopischen Ausnehmungen versehenen Hülsenoberfläche, besonders groß.

Dabei kann das Einprägen oder Aufrauen auch nur von einer Seite, beispielsweise nur von der Außenseite her, erfolgen.

Weil bei einer erfindungsgemäßen Lenkspindel eine Gleithülse eingesetzt ist, die an wenigstens einer einem Wellenteil zugewandten Oberfläche aufgerauht, insbesondere mit Einprägungen oder Ausnehmungen versehen ist, kann die Gleithülse in dieser Oberflächenstruktur Schmiermittel dauerhaft halten, so dass die Reibung auf Dauer verringert ist. Die Gleithülse kann dabei durch kalibrieren dem Profil der inneren Spindel angepasst sein, wobei vorteilhaft die Erzeugung der Einprägungen oder Ausnehmungen an der Oberfläche während des Kalibriervorgangs erzeugt werden.

Weil bei dem erfindungsgemäßen Verfahren zur Herstellung einer teleskopierbaren Lenkspindel mit einer inneren Spindel und einer äußeren Spindel die koaxial zueinander angeordnet sind und zur Drehmomentübertragung einen unrunden Querschnitt aufweisen, wobei zwischen der äußeren Spindel und der inneren Spindel ein Zwischenraum vorgesehen ist, in dem eine Gleithülse angeordnet ist, wobei die Gleithülse an wenigstens einer der inneren Spindel oder der äußeren Spindel zugewandten Oberfläche mit einer Oberflächenstrukturierung versehen ist, wobei die Oberflächenstrukturierung durch eine Walzoperation mit einer Walze oder Rolle gebildet wird, wird eine Vielzahl von kleinen Schmiermitteldepots erzeugt, die das Schmiermittel besonders dauerhaft halten und die bereits durch eine besonders geringe Menge an Schmiermittel ausreichend gefüllt werden können.

Dabei kann es bereits ausreichend sein, wenn die Walze mit einer glatten Oberfläche versehen ist und durch den Druck und die damit einhergehende Verformung die Gusshaut lokal aufgebrochen wird. Es kann auch vorteilhaft sein, wenn die Walze mit einer regellosen, kleinteiligen Oberflächenstruktur versehen ist, deren Strukturelemente kleiner als 500µm und insbesondere im Mittel kleiner als 100µm sind. Dadurch kann ein Aufbrechen der Gusshaut auch bei elastisch nachgiebigen Materialien bewirkt werden. Weiter wird so eine Struktur mit zwar regellosen geformeten und angeordneten, aber von der Größe her definierten Depots erzeugt.

Nachfolgend wird ein Ausführungsbeispiel der vorliegenden Erfindung anhand der Zeichnung beschrieben. Es zeigen:
Fig. 1: eine teleskopierbare Lenkspindel in einer Seitenansicht;
Fig. 2: die innere Lenkspindel mit aufgesetzter Gleithülse in einer perspektivischen Darstellung;
Fig. 3: die Lenkspindel gemäß Fig. 1 in einem Längsschnitt von der Seite;
Fig. 4: eine erfindungsgemäße Gleithülse in einer Seitenansicht;
Fig. 5: die Gleithülse gemäß Fig. 4 in einer perspektivischen Darstellung;
Fig. 6: eine schematische Darstellung zur Fertigung einer erfindungsgemäßen Gleithülse mit einer inneren Lenkspindel in einem Querschnitt; sowie
Fig. 7: eine Lenkspindel in einem Querschnitt durch die äußere Lenkspindel, die Gleithülse und die innere Lenkspindel.

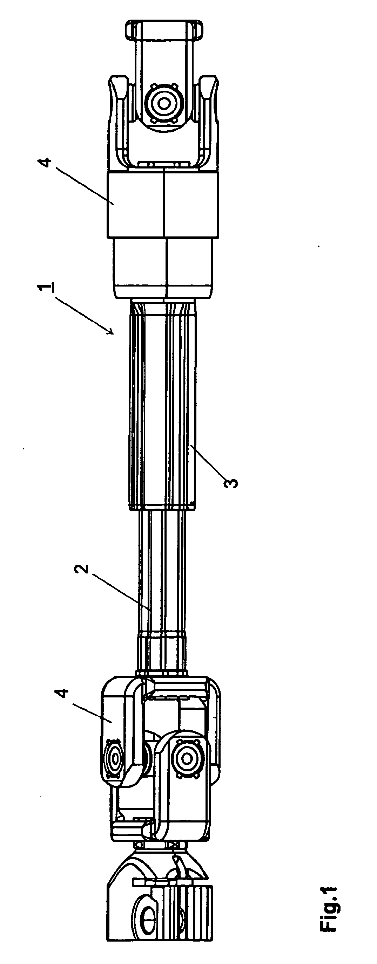

In der Fig. 1 ist eine teleskopierbare Lenkspindel 1 in einer Seitenansicht dargestellt. Die Lenkspindel 1 umfasst eine innere Spindel 2 und eine äußere Spindel 3. Die innere Spindel 2 ist mit einem unrunden, in diesem Beispiel etwa kleeblattförmigen Querschnitt versehen. Die äußere Spindel 3 ist rohrförmig ausgestaltet, mit einem inneren freien Querschnitt, der zu der äußeren Umfangskontur der inneren Lenkspindel komplementär ist. Endseitig tragen die innere Spindel 2 und die äußere Spindel 3 jeweils an sich bekannte Anschlußstücke 4 für Kardangelenke zur Verbindung mit einem Lenkgetriebe und einer Lenksäule. Als Gelenk ist im Beispiel ein Universalgelenk dargestellt, bei dem in den Anschlußstücken 4, die als Gabeln ausgebildet sind, die Zapfen eines Gelenkkreuzes (=Zapfenkreuz) drehbar gelagert sind, wobei die Lagerungen der Gabeln orthogonal zueinander versetzt sind. Denkbar und möglich ist es jedoch andere Gelenke oder auch völlig andere Elemente mit den teleskopierbaren Wellenteilen zu verbinden, beispielsweise an einem Ende direkt ein Ritzel für den Eingriff in eine Lenkgetriebe.

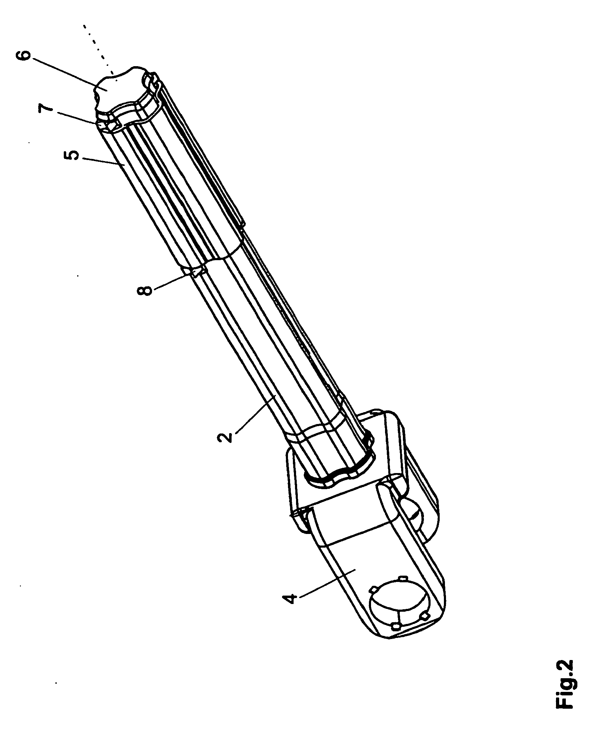

Die Fig. 2 zeigt die innere Lenkspindel 2 in einer perspektivischen Darstellung. Die Lenkspindel 2 trägt hier eine Gleithülse 5, die in der Nähe eines freien Endes 6 der inneren Spindel 2 auf die Außenkontur der Spindel 2 aufgesetzt und in Axialrichtung durch Rastnasen 7, 8 gesichert ist.

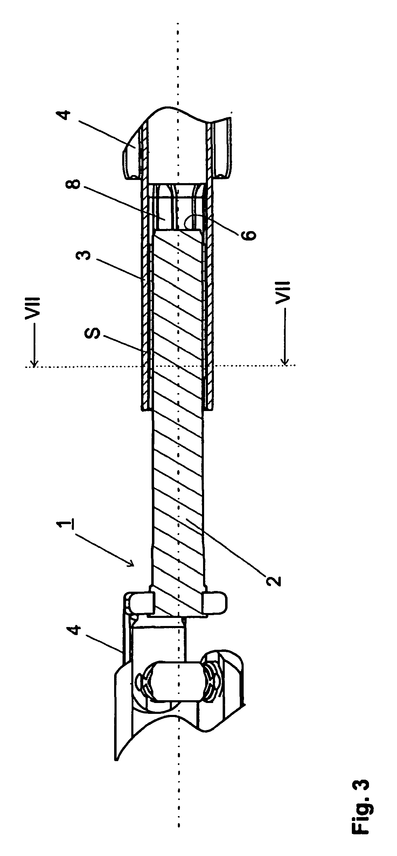

Die Fig. 3 zeigt die Lenkspindel 1 aus der Fig. 1 in einem Längsschnitt. Die innere Spindel 2 ist aus Vollmaterial gefertigt. Sie greift über etwa ¾ der Länge eines inneren Freiraums 8 in die Innenkontur der äußeren Spindel 3 ein. Etwa mittig in dem Überdeckungsbereich zwischen der inneren Spindel 2 und der äußeren Spindel 3 ist die Gleithülse 5 angeordnet. Das freie Ende 6 der inneren Lenkspindel 2 befindet sich in einem Abstand von dem Ende des Freiraums 9.

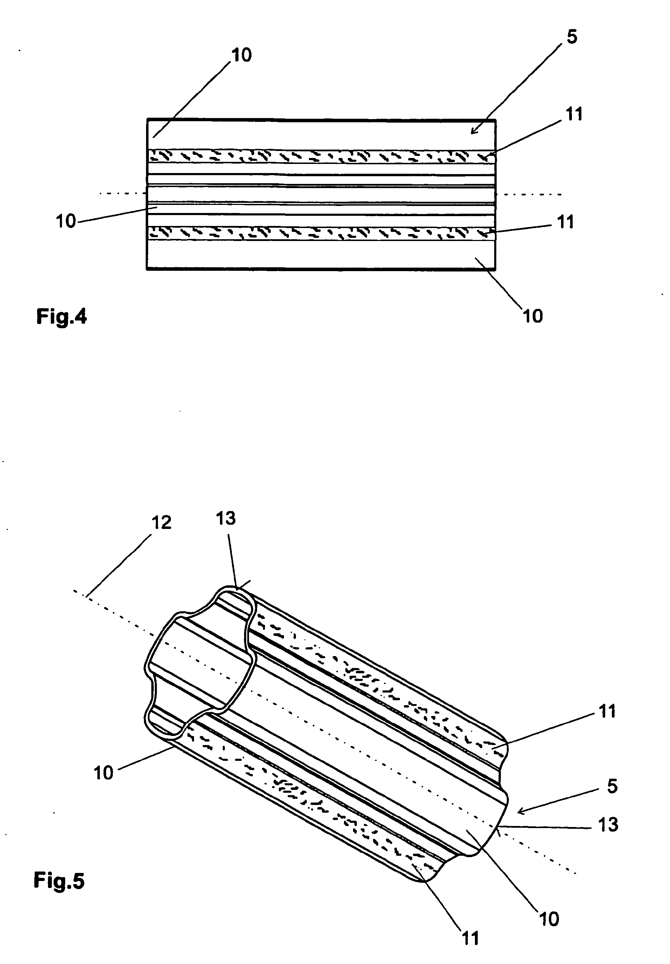

Die Fig. 4 zeigt die Gleithülse 5 in einer Seitenansicht. Die Gleithülse 5 weist an ihrer Außenseite glatte Oberflächenbereiche 10 und dazwischen liegende strukturierte Oberflächenbereiche 11 auf. Die geometrische Ausbildung der Gleithülse 5 ist in der Fig. 5 in einer perspektivischen Darstellung besser erkennbar. Die Gleithülse 5 weist einen Querschnitt auf, der der Kleeblattform der inneren Spindel 2 und der äußeren Spindel 3 etwa entspricht. Die Gleithülse 5 ist als Bauteil mit gleichförmigen Querschnitt und zwei parallelen, zu der Mittenachse 12 senkrecht orientierten Stirnflächen 13 ausgebildet. Die Gleithülse 5 kann beispielsweise durch Extrudieren aus einem thermoplastischen Material gefertigt werden.

Beim Extrudieren wird ebenso wie beim Spritzgießen Kunststoffmaterial mit erhöhter Temperatur oberhalb eines Weichpunktes in oder durch eine Form gepresst. Im Kontaktbereich des Kunststoffs mit der Form bildet sich eine glatte, der inneren Oberfläche der verwendeten Form entsprechende Schicht oder "Haut". Diese glatte Schicht, die die Bereiche 10 und auch die innere Oberfläche der Gleithülse 5 aus den Fig. 4 und 5 charakterisiert, hat keine Struktur, die geeignet wäre, Schmiermittel dauerhaft zu halten. Der unmittelbar nach der Fertigung vorliegende Zustand, der in den Vorrichtungen nach dem Stand der Technik verwendet wird, ist deshalb nicht dauerhaft zur Vermeidung des Stick-Slip-Effektes geeignet.

Um in der in Fig. 3 dargestellten Konfiguration, bei der die Gleithülse 5 beim Teleskopieren mit der inneren Spindel 2 bewegt und gegenüber der äußeren Spindel 3 verlagert wird, eine dauerhafte Reduktion der Kraft- und Gleitreibung zu garantieren, sind die strukturierten Bereiche 11 auf der äußeren Oberfläche der Gleithülse 5 vorgesehen.

Die strukturierten Bereiche 11 können in geeigneter Weise aufgerauht sein. Es handelt sich aber vorzugsweise um Einprägungen oder Ausnehmungen, die die aus dem Herstellungsvorgang resultierende glatte Oberfläche durchbrechen und die Taschen mit der Fähigkeit, Schmiermittel zu halten, ausbilden.

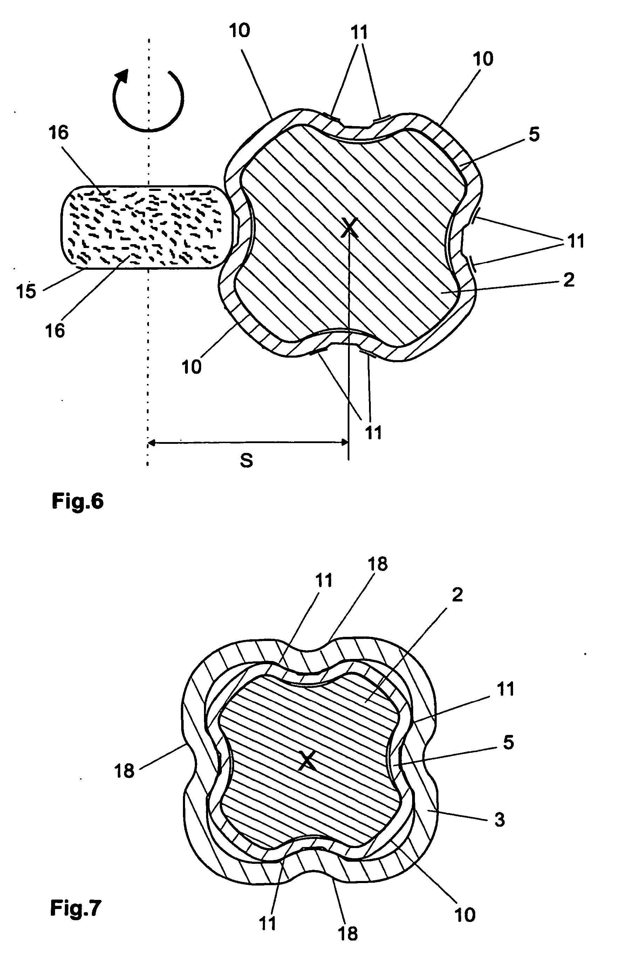

Ein Beispiel für die Fertigung einer Hülse 5 ist in der Fig. 6 dargestellt. Die Fig. 6 zeigt einen Querschnitt durch eine innere Lenkspindel 2 und eine Gleithülse 5. Die Gleithülse 5 wird durch eine Rolle 15 in die Bereiche der inneren Lenkspindel 2 gedrängt, die einen geringeren Radius von der Mittenachse aufweisen. Die Rolle 15 weist dabei eine Vielzahl von Vorsprüngen oder Stacheln 16 auf, die während des Rollvorgangs, der parallel zur Achsrichtung erfolgt, die Oberfläche der Gleithülse 5 durchdringen. Dabei wird die glatte Oberflächenstruktur durchbrochen und verändert. Die für die Schmiermittelhaltung erforderlichen Ausnehmungen oder Einprägungen werden gebildet. Die außerhalb des Kontaktbereichs mit der Rolle 15 liegenden Oberflächenbereiche der Gleithülse 5 bleiben glatt und bilden die bereits dargestellten glatten Oberflächenbereiche 10.

Wie Versuche ergeben haben, genügt es bereits im Fall, dass die Hülse aus langkettigen Polymeren gebildet ist, die langen Ketten aufzubrechen, um eine gute Schmierstoffaufnahme zu erreichen. Durch das Aufbrechen der längeren Ketten bilden sich quasi in der Oberfläche entsprechende Aufrauhungen, die als Schmiertaschen geeignet sind. Oft genügen bereits gering Veränderungen in der Oberfläche zur Verbesserung der andauernden Schmierung des Schiebesitzes. Dabei spielt auch der Effekt der durch eine Kalibrierung erreichte Vergrößerung der Kontaktfläche eine Rolle. Überraschenderweise ist es deshalb auch möglich, die geforderte Oberflächenstruktur mittels einer glatten Walze, deren Ra-Wert im Kontaktbereich zur Gleithülse 5 weniger als 1 beträgt, zu erreichen. Die Verwendung von derartigen glatten Walzen ist jedoch als Ausführungsform, die nicht unbedingt zu bevorzugen ist, zu verstehen, auch wenn sie in vielen Fällen zur Ausbildung einer Schmierstoff haltenden Oberflächenstruktur führen.

Die Strukturierung der Walze, die zur Fertigung der Gleithülse benutzt wird, ist vorzugsweise besonders kleinteilig und regellos ausgebildet. Sie kann z.B. durch oberflächlich auf die Walze aufgebrachte Partikel aus Hartmetall oder Keramik gebildet sein, wobei der mittlere Partikeldurchmesser kleiner als 500µm sein soll. Besonders bevorzugt wird ein mittlerer Partikeldurchmesser von weniger als 100µm. Eine derart ausgestattete Walze erzeugt beim Walzen der Oberfläche die gewünschte Oberflächenstruktur, indem die aus langkettigen Polymeren gebildete Gusshaut durchbrochen wird. Die dabei entstehenden sehr feinen und regellosen Einprägungen halten das Schmiermittel besonders gut. Es ist nicht erforderlich, große Mengen an Schmiermitteln in speziellen Schmiermitteldepots anzubringen, vielmehr reicht es aus, die so geschaffene Oberfläche durch Sprühen oder sonstiges Auftragen mit einem dünnen Schmiermittelfilm zu versehen, der sich dann in den Oberflächenstrukturen anlagert. Das Austreten des so gehaltenen Schmiermittels im Betrieb im Kraftfahrzeug ist nicht zu befürchten.

Gleichzeitig mit der Schaffung der Oberflächenstruktur kann auch eine Kalibration der Gleithülse an die äußere der inneren Spindel 2 durchgeführt werden. Mit Vorteil wird nach der Walzoperation mit einer strukturierten Walze eine Zweite Walzoperation mit einer "glatten" Walze durchgeführt. Dabei erfolgt zusätzlich zur Ausbildung der Oberflächenstruktur in einem vordefinierten Bereich 11 eine Kalibration der Gleithülse auf die innere Spindel 2 und damit eine Vergrößerung der Kontaktfläche zwischen Gleithülse 5 und innerer Spindel 2.

Als besonders vorteilhaft haben sich zur Einbringung der Struktur Walzen mit Rauhigkeiten (Die Ra- und Rz-Werte sind entsprechend der DIN EN ISO 4288 (1998-04), oder dem "Tabellenbuch Metall" vom VERLAG EUROPA LEHRMITTEL, Haan-Gruiten, 43. Auflage 2005, Seite 99) mit Ra-Werten im Bereich von 5 - 30 und mit Rz-Werten im Bereich von 5 - 50 im Versuch erwiesen. Die Hülse weist dann Ra-Werte im Bereich 1 - 30 auf. Wie oben bereits ausgeführt können aber durchaus Walzen mit Rauhigkeiten von Ra < 5 mit Erfolg angewendet werden. Die Auswahl hängt vom verwenden Schmierstoff und dem Kunststoff ab.

Mit Vorzug wird die teleskopierbare Lenkspindel mit folgenden Verfahrensschritten hergestellt:
- Aufschieben einer Gleithülse, die eine nichtrunde Querschnittskontur, bevorzugt eine kleeblattähnliche Querschnittskontur, aufweist, auf die innere Spindel 2;
- Walzen der nach aussen gerichteten Oberfläche der Gleithülse 5 in mindestens vordefinierten Bereichen mit einer vordefinierten Zustellkraft und/oder einem vordefinierten Zustellweg, wobei die innere Spindel 2 als Abstützung für die Walzoperation dient;
- Auftragen von Schmiermittel auf zumindest Teilbereiche der nach außen gerichteten Oberfläche der Gleithülse 5;
- Aufschieben der äußeren Spindel 3 auf die Gleithülse 5 mit der, von der Gleithülse umschlossenen inneren Spindel 2.

Mit Vorzug erfolgt die Walzoperation in allen Kontaktbereichen, die zwischen der nach außen gerichteten Oberfläche der Gleithülse 5 und der nach innen gerichteten Oberfläche der äußeren Lenkspindel nach der Montage entstehen. Dabei ist es denkbar und möglich, die Oberflächenbereiche einzeln der Reihe nach oder bevorzugt jeweils gegenüberliegende Bereiche oder noch mehr bevorzugt alle Bereiche gleichzeitig der Walzoperation zu unterziehen, werden alle Bereiche gleichzeitig der Walzoperation unterzogen, so ist das Verfahren besonders kostengünstig und kann am besten die zusätzlich gewünschte Kalibrierfunktion, zur Anpassung der Gleithülse an die innere Spindel erfüllen.

Durch die leichte Formabweichung der Querschnittsformen zwischen der inneren und äußeren Kontur der Gleithülse 5 und den zugeordneten Oberflächen der äußeren bzw. inneren Spindel entsteht eine Federwirkung, die kleine Verdreh-Spiele ausgleichen kann.

Die Fig. 7 zeigt schließlich eine Querschnitt durch die Lenkspindel aus Fig. 1 und Fig. 3 entlang einer Linie VII-VII aus Fig. 3. Die äußere Spindel 3 ist koaxial zu der inneren Spindel 2 und der Gleithülse 5 angeordnet. In besonderen Profilbereichen 18 weist die äußere Spindel 3 in eine zu der inneren Spindel 2 komplementäre Form auf. Im montierten Zustand stehen die Bereiche, die im Betrieb ein Drehmoment übertragen, in Kontakt mit den strukturierten Bereichen 11 der Gleithülse 5. In den übrigen Bereichen ist mit Vorzug kein oder nur ein unwesentlicher Kontakt zwischen der äußeren Spindel 3 und der Gleithülse 5 gegeben. Hier ist eine Strukturierung der Gleithülse 5 möglich aber nicht erforderlich.

In einer Weiterführung der Erfindung kann der spezielle Profilbereich 18 erst bei der Montage, beispielsweise mittels einpressen, kalibriert werden, so dass die genaue Form und der Kontakt dargestellt ist.

Im späteren Betrieb ist es möglich, die Lenkspindel 1 mit den Anschlussstücken 4 für die Kardangelenke einerseits an eine Lenksäule drehfest angeschlossen und andererseits mit der Eingangswelle eines Lenkgetriebes verbunden. Karosseriebewegungen führen dann zu einer Axialbewegung der Kardangelenke aufeinander zu oder voneinander weg, so dass eine Teleskopbewegung der inneren Spindel 2 gegenüber der äußeren Spindel 3 erforderlich wird. Die Gleithülse 5 ist im Wesentlichen unbeweglich gegenüber der inneren Spindel 2 festgelegt. Sie führt also ebenfalls eine Teleskopbewegung gegenüber der äußeren Spindel 3 durch. Die strukturierten Bereiche 11 sind dabei in enger Anlage an die innere Oberfläche der äußeren Spindel 3 gebracht. Die in den strukturierten Bereichen 11 angeordneten Ausnehmungen oder Einprägungen oder die dort vorhandene, nachträglich eingebrachte, Oberflächenrauhigkeit hält ein dort aufgetragenes Schmiermittel, vorzugsweise in einer Art von Taschen, die umfangsseitig allseits geschlossen sind. Auf diese Weise wird eine dauerhafte Schmierung der strukturierten Bereiche 11 gegenüber der äußeren Spindel 3 erzielt, die den nachteiligen Stick-Slip-Effekt durch Herabsetzung der Haftreibung im Kontaktbereich verringert oder gänzlich eliminiert. Die relativ großen Oberflächen der strukturierten Bereiche 11 gewährleisten eine dauerhafte Spielfreiheit bei der im Betrieb erforderlichen Drehmomentbeaufschlagung. Die Auslegung wird dabei so gewählt, dass die Gleithülse 5 den im Betrieb einwirkenden Kräfte und Momente lebensdauerfest standhält.

Die Erfindung umfasst auch den umgekehrten Fall, in dem die Gleithülse an Bereichen, die an ihrer inneren Fläche angeordnet sind, aufgerauht wird. Entsprechend wird die Gleithülse in die äußere Spindel 3 eingeführt und anschließend der Walzoperation unterworfen. Dabei erfolgt eine Aufrauhung in einem vordefinierten Bereich 11 und eine Kalibration der Gleithülse 5 auf die Innenkontur der äußeren Spindel 3. Die Gleithülse wird mit Vorteil axial gegen eine Verschiebung gegenüber der äußeren Spindel festgelegt, während die axiale Verschiebung zwischen Gleithülse 5 und innerer Spindel 2 zugelassen wird.

Für die Erfindung ist es nicht erforderlich, die Hülse gegenüber einer der beiden Wellen in Verschieberichtung (=Teleskoprichtung) festzulegen, auch wenn das zu bevorzugen ist.

### Bezugszeichenliste

- 1.: Lenkspindel
- 2.: Innere Spindel
- 3.: Äußere Spindel
- 4.: Anschlußstück für Kardangelenk
- 5.: Gleithülse
- 6.: Freies Ende
- 7.: Rastnase
- 8.: Rastnase
- 9.: Innerer Freiraum
- 10.: Glatter Oberflächenbereich
- 11.: Strukturierter Oberflächenbereich
- 12.: Mittenachse
- 13.: Stirnflächen
- 15.: Rolle
- 16.: Stacheln
- 18.: Profilbereich

## Patentansprüche

1. Gleithülse für die Lagerung zweier koaxial zu einer Mittenachse (12) angeordneter, relativ zueinander teleskopierbarer Bauelemente (2, 3), wobei die Gleithülse (5) aus einem langkettige Polymere aufweisenden Kunststoff im Spritzguss- oder Extrusionsverfahren hergestellt ist, mit einer inneren Oberfläche und einer äußeren Oberfläche, die eine Gusshaut aufweisen, wobei wenigstens ein Bereich (11) der inneren und/oder der äußeren Oberfläche nach der Herstellung mit einem Bearbeitungsverfahren mit einer Schmierstoff haltenden Oberflächenstruktur ausgestattet ist, **dadurch gekennzeichnet, dass** die schmierstoffhaltende Oberflächenstruktur durch aufgebrochene Ketten der langkettigen Polymere der Gleithülse gebildet ist, wobei die aufgebrochenen Ketten mittels einer Walzoperation in der Gusshaut erzeugt sind.

2. Gleithülse nach Anspruch 1, **dadurch gekennzeichnet, dass** die Oberfläche in dem strukturierten Oberflächenbereich (11) mit Einprägungen oder Ausnehmungen versehen ist und zwischen den Einprägungen oder Ausnehmungen eine glatte Oberfläche (10) aufweist.

3. Gleithülse nach einem der vorhergehenden Ansprüche, **dadurch gekennzeichnet, dass** die Einprägungen oder Ausnehmungen nur an der Außenseite vorgesehen sind.

4. Gleithülse nach einem der vorhergehenden Ansprüche, **dadurch gekennzeichnet, dass** die Einprägungen oder Ausnehmungen in streifenförmigen, parallel zu der Mittenachse (12) verlaufenden Bereichen (11) angeordnet sind.

5. Teleskopierbare Lenkspindel (1) mit einer inneren Spindel (2) und einer äußeren Spindel (3), die koaxial zueinander angeordnet sind und zur Drehmomentübertragung einen unrunden Querschnitt aufweisen, wobei zwischen der äußeren Spindel (3) und der inneren Spindel (2) ein Zwischenraum vorgesehen ist, in dem eine Gleithülse (5) angeordnet ist, **dadurch gekennzeichnet, dass** die Gleithülse (5) an wenigstens einer der inneren Spindel (2) oder der äußeren Spindel (3) zugewandten Oberfläche mit einer Oberflächenstrukturierung (11) versehen ist, die durch aufgebrochene Ketten der langkettigen Polymere gebildet ist, welche mittels einer Walzoperation in die Gusshaut eingebracht sind.

6. Teleskopierbare Lenkspindel nach Anspruch 5, **dadurch gekennzeichnet, dass** die strukturierten Oberflächebereiche (11) der Gleithülse (5) mit Einprägungen oder Ausnehmungen versehen ist.

7. Teleskopierbare Lenkspindel nach einem der vorhergehenden Ansprüchen 5, 6, **dadurch gekennzeichnet, dass** die Gleithülse (5) durch Kalibrieren dem Profil der inneren Spindel (2) angepasst ist.

8. Teleskopierbare Lenkspindel nach einem der vorhergehenden Ansprüchen 5 bis 7, **dadurch gekennzeichnet, dass** die Erzeugung der Einprägungen oder Ausnehmungen an der Oberfläche während des Kalibriervorgangs erzeugt werden.

9. Teleskopierbare Lenkspindel nach einem der vorhergehenden Ansprüchen 5 bis 8, **dadurch gekennzeichnet, dass** die Einprägungen oder Ausnehmungen in dem Oberflächenbereich (11) der Gleithülse (5) durch Walzen mit einer Walze oder Rolle (15) erzeugt sind.

10. Teleskopierbare Lenkspindel nach Anspruch 9, **dadurch gekennzeichnet, dass** die Walze oder die Rolle an ihrer Oberfläche strukturiert ist.

11. Verfahren zur Herstellung einer teleskopierbaren Lenkspindel (1) mit einer inneren Spindel (2) und einer äußeren Spindel (3) die koaxial zueinander angeordnet sind und zur Drehmomentübertragung einen unrunden Querschnitt aufweisen, wobei zwischen der äußeren Spindel (3) und der inneren Spindel (2) ein Zwischenraum vorgesehen ist, in dem eine Gleithülse (5) angeordnet ist, wobei die Gleithülse (5) an wenigstens einer der inneren Spindel (2) oder der äußeren Spindel (3) zugewandten Oberfläche mit einer Oberflächenstrukturierung (11) versehen ist, **dadurch gekennzeichnet, dass** die Oberflächenstrukturierung (11) durch eine Walzoperation mit einer Walze oder Rolle (15) gebildet wird.

12. Verfahren nach Anspruch 11, **dadurch gekennzeichnet, dass** die Walze mit einer glatten Oberfläche versehen ist.

13. Verfahren nach Anspruch 11, **dadurch gekennzeichnet, dass** die Walze mit einer regellosen, kleinteiligen Oberflächenstruktur versehen ist, deren Strukturelemente kleiner als 500µm sind.

14. Verfahren nach Anspruch 12, **dadurch gekennzeichnet, dass** die Strukturelemente im Mittel kleiner als 100µm sind.

## Claims

1. Sliding sleeve for supporting two components (2, 3) arranged coaxially to a central axis (12) and telescopable relative to each other, the sliding sleeve (5) being manufactured from a plastics material comprising long-chain polymers in an injection molding or extrusion process, with an inner surface and an outer surface, which have a casting skin, at least one area (11) of the inner and/or outer surface being provided with a lubricant-retaining surface structure after manufacture by a machining process, **characterised in that** the lubricant-retaining surface structure is formed by broken-up chains of long-chain polymers of the sliding sleeve, the broken-up chains being produced by means of a rolling operation in the casting skin.

2. Sliding sleeve according to claim 1, **characterised in that** the surface in the structured surface area (11) is provided with indentations or recesses and has a smooth surface (10) between the indentations or recesses.

3. Sliding sleeve according to any one of the preceding claims, **characterised in that** the indentations or recesses are provided only on the outside.

4. Sliding sleeve according to any one of the preceding claims, **characterised in that** the indentations or recesses are arranged in strip-shaped areas (11) running parallel to the central axis (12).

5. Telescopable steering spindle (1) having an inner spindle (2) and an outer spindle (3), which are arranged coaxially to one another and have an out-of-round cross-section for transmitting torque, an intermediate space being provided between the outer spindle (3) and the inner spindle (2), in which a sliding sleeve (5) is arranged, **characterised in that** the sliding sleeve (5) is provided with a surface structuring (11) on at least one surface facing the inner spindle (2) or the outer spindle (3), which surface structuring (11) is formed by broken-up chains of long-chain polymers, which are introduced by means of a rolling operation into the casting skin.

6. Telescopable steering spindle according to claim 5, **characterised in that** the structured surface area (11) of the sliding sleeve (5) is provided with indentations or recesses.

7. Telescopable steering spindle according to any one of the preceding claims 5, 6, **characterised in that** the sliding sleeve (5) is adapted to the profile of the inner spindle (2) by calibrating.

8. Telescopable steering spindle according to any one of the preceding claims 5 to 7, **characterised in that** the indentations or recesses are produced on the surface during the calibration process.

9. Telescopable steering spindle according to any one of the preceding claims 5 to 8, **characterised in that** the indentations or recesses in the surface area (11) of the sliding sleeve (5) are produced by rolling with a roller or roll (15).

10. Telescopable steering spindle according to claim 9, **characterised in that** the roller or the roll is structured on its surface.

11. Method for manufacturing a telescopable steering spindle (1) having an inner spindle (2) and an outer spindle (3) which are arranged coaxially to one another and have an out-of-round cross-section for transmitting torque, an intermediate space being provided between the outer spindle (3) and the inner spindle (2), in which a sliding sleeve (5) is arranged, the sliding sleeve (5) being provided with a surface structuring (11) on at least one surface facing the inner spindle (2) or the outer spindle (3), **characterised in that** the surface structuring (11) is formed by a rolling operation with a roller or roll (15).

12. Method according to claim 11, **characterised in that** the roller is provided with a smooth surface.

13. Method according to claim 11, **characterised in that** the roller is provided with an irregular surface structure divided into small sections, the structural elements of which are less than 500µm.

14. Method according to claim 12, **characterised in that** the structural elements are on average less than 100µm.

## Revendications

1. Douille de coulissement pour le montage réciproque de deux éléments de construction (2,3), qui sont agencés coaxialement à un axe central (12) et peuvent se déplacer relativement l'un par rapport à l'autre de manière télescopique, la douille de coulissement (5) étant fabriquée par un procédé d'extrusion ou de moulage par injection, en une matière plastique qui présente des polymères à chaines longues, et la douille de coulissement comportant une surface intérieure et une surface extérieure, qui présentent une peau de moulage, au moins une zone (11) de la surface intérieure et/ou extérieure étant, après la fabrication, dotée, par un procédé d'usinage, d'une structure de surface retenant une substance de graissage, **caractérisée en ce que** la structure de surface retenant la substance de graissage est formée par des chaines fracturées des polymères à chaines longues de la douille de coulissement, les chaines fracturées étant produites, à l'aide d'une opération de laminage, dans la peau de moulage.

2. Douille de coulissement selon la revendication 1, **caractérisée en ce que** la surface dans la zone de surface structurée (11) est munie d'empreintes en creux ou d'évidements, et présente une surface lisse (10) entre les empreintes en creux ou les évidements.

3. Douille de coulissement selon l'une des revendications précédentes, **caractérisée en ce que** les empreintes en creux ou les évidements ne sont prévus que sur le côté extérieur.

4. Douille de coulissement selon l'une des revendications précédentes, **caractérisée en ce que** les empreintes en creux ou les évidements sont agencés dans des zones (11) en forme de bande, qui s'étendent parallèlement à l'axe central (12).

5. Arbre de direction (1) télescopique, comprenant un arbre intérieur (2) et un arbre extérieur (3), qui sont agencés de manière coaxiale l'un par rapport à l'autre et présentent une section transversale non ronde en vue de la transmission d'un couple, un espace intermédiaire, dans lequel est agencée une douille de coulissement (5), étant prévu entre l'arbre extérieur (3) et l'arbre intérieur (2), **caractérisé en ce que** la douille de coulissement (5) est pourvue sur au moins une surface dirigée vers l'arbre intérieur (2) ou vers l'arbre extérieur (3), d'une structuration de surface (11) formée par des chaines fracturées des polymères à chaines longues, qui sont réalisées dans la peau de moulage à l'aide d'une opération de laminage.

6. Arbre de direction télescopique selon la revendication 5, **caractérisé en ce que** les zones de surface (11) structurées de la douille de coulissement (5) sont pourvues d'empreintes en creux ou d'évidements.

7. Arbre de direction télescopique selon l'une des revendications précédentes 5, 6, **caractérisé en ce que** la douille de coulissement (5) est adaptée, par calibrage, au profil de l'arbre intérieur (2).

8. Arbre de direction télescopique selon l'une des revendications précédentes 5 à 7, **caractérisé en ce que** les empreintes en creux ou les évidements dans la surface sont produits au cours de l'opération de calibrage.

9. Arbre de direction télescopique selon l'une des revendications précédentes 5 à 8, **caractérisé en ce que** les empreintes en creux ou les évidements dans la zone de surface (11) de la douille de coulissement (5), sont produits par laminage au moyen d'un rouleau ou d'un galet (15).

10. Arbre de direction télescopique selon la revendication 9, **caractérisé en ce que** le rouleau ou le galet est structuré sur sa surface.

11. Procédé de fabrication d'un arbre de direction (1) télescopique comprenant un arbre intérieur (2) et un arbre extérieur (3), qui sont agencés de manière coaxiale l'un par rapport à l'autre et présentent une section transversale non ronde en vue de la transmission d'un couple, un espace intermédiaire, dans lequel est agencée une douille de coulissement (5), étant prévu entre l'arbre extérieur (3) et l'arbre intérieur (2), et la douille de coulissement (5) étant pourvue sur au moins une surface dirigée vers l'arbre intérieur (2) ou vers l'arbre extérieur (3), d'une structuration de surface (11), **caractérisé en ce que** la structuration de surface (11) est réalisée par une opération de laminage à l'aide d'un rouleau ou d'un galet (15).

12. Procédé selon la revendication 11, **caractérisé en ce que** le rouleau est pourvu d'une surface lisse.

13. Procédé selon la revendication 11, **caractérisé en ce que** le rouleau est pourvu d'une structure de surface irrégulière à petits éléments, dont les éléments de structure sont plus petits que 500 µm.

14. Procédé selon la revendication 13, **caractérisé en ce que** les éléments de structure sont en moyenne plus petits que 100 µm.
